# EUROPÄISCHE PATENTSCHRIFT

(11) **EP 3 820 750 B1**
(45) Veröffentlichungstag und Bekanntmachung des Hinweises auf die Patenterteilung: **24.08.2022**
(21) Anmeldenummer: 19731173.1
(22) Anmeldetag: 06.06.2019
(51) Int. Cl.: B60T 13/74, B60T 7/04

(54) **ELEKTROMECHANISCHER BREMSKRAFTVERSTÄRKER UND HERSTELLUNGSVERFAHREN FÜR EINEN ELEKTROMECHANISCHEN BREMSKRAFTVERSTÄRKER**
ELECTROMECHANICAL BRAKE BOOSTER AND METHOD FOR PRODUCING AN ELECTROMECHANICAL BRAKE BOOSTER
AMPLIFICATEUR DE PUISSANCE DE FREINAGE ÉLECTROMECANIQUE ET PROCÉDÉ DE FABRICATION D'UN AMPLIFICATEUR DE PUISSANCE DE FREINAGE ÉLECTROMECANIQUE

(30) Priorität: 11.07.2018 DE 102018211549
(43) Veröffentlichungstag der Anmeldung: 19.05.2021
(73) Patentinhaber: Robert Bosch GmbH, 70442 Stuttgart (DE)
(72) Erfinder: BOLLWERK, Andre, 71711 Steinheim An Der Murr (DE); NAGEL, Willi, 71686 Remseck/Hochdorf (DE)
(86) Internationale Anmeldenummer: PCT/EP2019/064812
(87) Internationale Veröffentlichungsnummer: WO 2020/011457

(56) Entgegenhaltungen:
- DE-A1-102015 217 528
- DE-A1-102015 226 508

## Beschreibung

Die Erfindung betrifft einen elektromechanischen Bremskraftverstärker für ein Bremssystem eines Fahrzeugs. Ebenso betrifft die Erfindung ein Herstellungsverfahren für einen elektromechanischen Bremskraftverstärker für ein Bremssystem eines Fahrzeugs.

### Stand der Technik

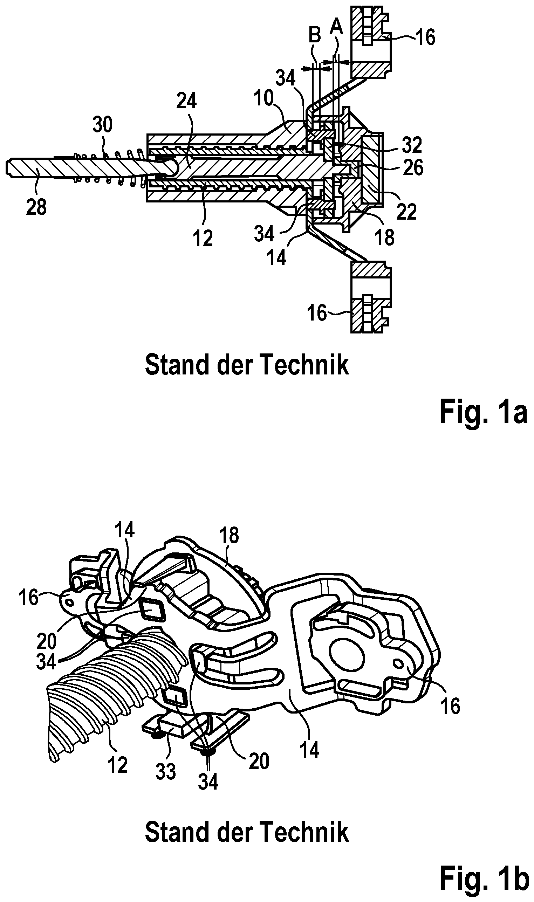

Fig. 1a und 1b zeigen schematische Gesamt- und Teildarstellungen eines herkömmlichen Bremskraftverstärkers, welcher der Anmelderin als interner Stand der Technik bekannt ist.

Der in Fig. 1a und 1b schematisch dargestellte herkömmliche Bremskraftverstärker umfasst eine Spindelmutter 10, welche mittels eines an die Spindelmutter 10 angebundenen (nicht skizzierten) elektrischen Motors in eine Rotationsbewegung versetzbar ist und mit einer Hohlspindel 12 zusammenwirkt. Die Hohlspindel 12 ist mittels einer Abstützplatte 14 derart drehfest gehalten, dass die Spindel 12 und die Abstützplatte 14 mittels der in ihre Rotationsbewegung versetzten Spindelmutter 10 in eine Translationsbewegung versetzbar sind. Dazu sind zwei Gleitbuchsen 16, welche jeweils über je einen (nicht dargestellten) Zuganker geführt sind, in jeweils eine Gleitbuchsen-Aufnahmeöffnung der Abstützplatte 14 eingesetzt. Ein Reaktionsscheibe-Aufnahmekörper 18 ist mittels mehrerer daran ausgebildeter Clips 20 derart an der Abstützplatte 14 festgeklemmt, dass der Reaktionsscheibe-Aufnahmekörper 18 zusammen mit der in die Translationsbewegung versetzten Abstützplatte 14 mitbewegt wird. Aufgrund seiner Clips 20 ist der Reaktionsscheibe-Aufnahmekörper 18 in der Regel aus Kunststoff. Der Reaktionsscheibe-Aufnahmekörper 18 weist außerdem eine Aufnahmeöffnung auf, in welcher eine Reaktionsscheibe 22 angeordnet ist. Die durch die Rotationsbewegung der Spindelmutter 10 ausgelöste Translationsbewegung des Reaktionsscheibe-Aufnahmekörpers 18 bewirkt somit eine Übertragung einer Motorkraft auf die Reaktionsscheibe 22.

Wie in Fig. 1a erkennbar, erstreckt sich ein Plunger 24 mit einer daran befestigten oder ausgebildeten Pastille 26 zumindest teilweise durch ein Innenvolumen der Hohlspindel 12. Außerdem ist in dem Reaktionsscheibe-Aufnahmekörper 18 eine mittige Öffnung derart ausgebildet, dass die durch die mittige Öffnung ragende Pastille 26 in Kontakt mit der Reaktionsscheibe 22 gebracht werden kann. Über eine Eingangsstange 28, welche mittels einer Rückstellfeder 30 an der Hohlspindel 12 abgestützt ist, kann eine auf ein Bremsbetätigungselement/Bremspedal ausgeübte Fahrerbremskraft über die Eingangsstange 28 auf den Plunger 24 übertragen werden. Die auf den Plunger 24 übertragene Fahrerbremskraft ist über die durch die mittige Öffnung ragende Pastille 26 auf die Reaktionsscheibe 22 übertragbar.

Über die Reaktionsscheibe 22 können sowohl die Motorkraft als auch die Fahrerbremskraft auf mindestens einen nachgeordneten Kolben eines (nicht dargestellten) Hauptbremszylinders übertragen werden. Auf diese Weise kann ein Druckaufbau in dem Hauptbremszylinder und mindestens einen daran angebundenen Radbremszylinder bewirkt werden.

Auf einer von der Spindelmutter 10 weg gerichteten Seite der Abstützplatte 14 ist eine flächige Passform 32 an dem Plunger 24 befestigt, wobei die flächige Passform 32 sich senkrecht von dem Plunger 24 weg durch ein von dem Reaktionsscheibe-Aufnahmekörper 18 aufgespanntes Innenvolumen erstreckt. Die flächige Passform 32 dient u.a. als Träger für einen Magneten 33 eines (Differenz-) Wegsensors.

Im unbetätigten Zustand des elektromechanischen Bremskraftverstärkers, d.h. sofern die Motorkraft und die Fahrerbremskraft gleich Null sind, liegen ein Abstand A ungleich Null zwischen der flächigen Passform 32 und einer zu ihr ausgerichteten und das Innenvolumen begrenzenden Fläche des Reaktionsscheibe-Aufnahmekörpers 18 und ein Abstand B ungleich Null zwischen der flächigen Passform 32 und der Abstützplatte 14 vor. Der Abstand A ungleich Null ist mittels der Form der Pastille 26 festgelegt. Der Abstand B ungleich Null ist durch vier Kunststoff-Pins 34, welche jeweils durch eine in der Abstützplatte 14 ausgebildeten Öffnung ragen und mittels welchen die flächige Passform 32 von der die Abstützplatte 14 kontaktierenden Spindelmutter 10 abgestützt ist, festgelegt.

DE 10 2015 217528 A1 und DE 10 2015 226508 A1 betreffen jeweils einen elektromechanischen Bremskraftverstärker nach dem Stand der Technik.

### Offenbarung der Erfindung

Die vorliegende Erfindung schafft einen elektromechanischen Bremskraftverstärker für ein Bremssystem eines Fahrzeugs mit den Merkmalen des Anspruchs 1 und ein Herstellungsverfahren für einen elektromechanischen Bremskraftverstärker für ein Bremssystem eines Fahrzeugs mit den Merkmalen des Anspruchs 8.

### Vorteile der Erfindung

Die vorliegende Erfindung schafft elektromechanische Bremskraftverstärker, bei welchen die Abstützplatte und der Reaktionsscheibe-Aufnahmekörper als ein einstückiges Bauteil ausgebildet sind. Darunter ist zu verstehen, dass die Abstützplatte und der daran ausgebildete Reaktionsscheibe-Aufnahmekörper aus dem gleichen Ausgangsmaterial und mittels des gleichen Formgebungsprozesses einstückig ausgebildet sind. Die Abstützplatte und der Reaktionsscheibe-Aufnahmekörper sind somit nicht miteinander verclippt, nicht miteinander verrastet, nicht miteinander verschraubt und nicht miteinander verklebt. Durch die "Integration" von Abstützplatte und Reaktionsscheibe-Aufnahmekörper in das einstückige Bauteil ist das einstückige Bauteil vergleichsweise kompakt und kann deshalb vorteilhafter als ein herkömmliches "Abstützplatten-Einzelteil" und ein "Reaktionsscheibe-Aufnahmekörper-Einzelteil" gemäß dem Stand der Technik in den jeweils damit ausgebildeten elektromechanischen Bremskraftverstärker eingesetzt werden. Bezüglich einer genaueren Beschreibung der Vorteile des einstückigen Bauteils wird auf die nachfolgende Figurenbeschreibung verwiesen.

In einer vorteilhaften Ausführungsform des elektromechanischen Bremskraftverstärkers ist die Abstützplatte mit dem Reaktionsscheibe-Aufnahmekörper als einstückiges Bauteil aus einem einzigen Stück Blech geformt. Das einstückige Bauteil kann beispielsweise aus dem einzigen Stück Blech gestanzt, gebogen und/oder tiefgezogen sein. Somit können vergleichsweise einfache Herstellungsprozesse zum Herstellen der Abstützplatte mit dem Reaktionsscheibe-Aufnahmekörper als einstückiges Bauteil genutzt werden. Das einstückige Bauteil ist deshalb relativ kostengünstig herstellbar. Zusätzlich weist ein derartig hergestelltes einstückiges Bauteil eine hohe Robustheit, und damit ein relativ geringes Beschädigungsrisiko während eines Betriebs des damit ausgestatteten elektromechanischen Bremskraftverstärkers auf.

In einer weiteren vorteilhaften Ausführungsform des elektromechanischen Bremskraftverstärkers ist an einem die Aufnahmeöffnung umrahmenden Rand des einstückigen Bauteils mindestens ein Gleitbuchsen-Befestigungsabschnitt mit jeweils einer Gleitbuchsen-Aufnahmeöffnung ausgebildet, wobei mindestens eine Gleitbuchse in die mindestens eine Gleitbuchsen-Aufnahmeöffnung eingesetzt ist, welche mittels je eines Zugankers geführt ist. Auf die Vorteile einer Führung der Abstützplatte mittels mindestens einer Gleitbuchse und mittels mindestens eines Zugankers muss somit bei dieser Ausführungsform des elektromechanischen Bremskraftverstärkers nicht verzichtet werden.

Vorzugsweise ist bei dem elektromechanischen Bremskraftverstärker ein Plunger mit einem daran befestigten oder ausgebildeten Pastillen-Teil zumindest teilweise derart innerhalb der als Hohlspindel ausgebildeten Spindel angeordnet, dass das Pastillen-Teil in Kontakt mit der Reaktionsscheibe vorliegt oder bringbar ist, wobei an dem Plunger eine sich senkrecht davon weg erstreckende flächige Passform befestigt oder ausgebildet ist, und wobei in dem einstückigen Bauteil mindestens eine durchgehende Öffnung ausgebildet ist, durch welche jeweils ein Teilabschnitt der flächigen Passform ragt. Die flächige Passform ermöglicht sowohl eine erste Kontaktfläche, welche eine zugeordnete Kontaktfläche des Reaktionsscheibe-Aufnahmekörpers des einstückigen Bauteils kontaktieren kann, als auch eine zweite Kontaktfläche, welche eine Kontaktfläche der Abstützplatte des einstückigen Bauteils kontaktieren kann. Somit können Kräfte zwischen dem einstückigen Bauteil und einer aus dem Plunger, dem Pastille-Teil und der flächigen Passform gebildeten Komponente übertragen werden.

Vorzugsweise ist an der Spindelmutter mindestens ein Vorstand ausgebildet, welcher in Kontakt mit dem mindestens einen durch die mindestens eine durchgehende Öffnung ragenden Teilabschnitt der flächigen Passform vorliegt oder bringbar ist. Auf das Anbringen der herkömmlicherweise genutzten Kunststoff-Pins an der flächigen Passform kann somit problemlos verzichtet werden. Dies erleichtert eine Herstellung der flächigen Passform und reduziert die dabei anfallenden Herstellungskosten.

Bevorzugter Weise ist ein Magnet an dem mindestens einen durch die mindestens eine durchgehende Öffnung ragenden Teilabschnitt der flächigen Passform festgesteckt. Der Magnet kann mit einem benachbart zu dem Magneten an dem einstückigen Bauteil befestigten Wegsensor wechselwirken. Eine Sensorik zum verlässlichen Bestimmen eines Differenzwegs ist somit leicht und kostengünstig ausbildbar.

Die vorausgehend beschriebenen Vorteile sind auch bei einem Ausführen eines korrespondierenden Herstellungsverfahrens für einen elektromechanischen Bremskraftverstärker für ein Bremssystem eines Fahrzeugs gewährleistet. Es wird ausdrücklich darauf hingewiesen, dass das Herstellungsverfahren gemäß den oben erläuterten Ausführungsformen des elektromechanischen Bremskraftverstärkers weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: schematische Gesamt- und Teildarstellungen eines herkömmlichen Bremskraftverstärkers;
- Fig. 2a bis 2c: schematische Teildarstellungen einer Ausführungsform des elektromechanischen Bremskraftverstärkers; und
- Fig. 3: ein Flussdiagramm zum Erläutern einer Ausführungsform des Herstellungsverfahrens für einen elektromechanischen Bremskraftverstärker für ein Bremssystem eines Fahrzeugs.

### Ausführungsformen der Erfindung

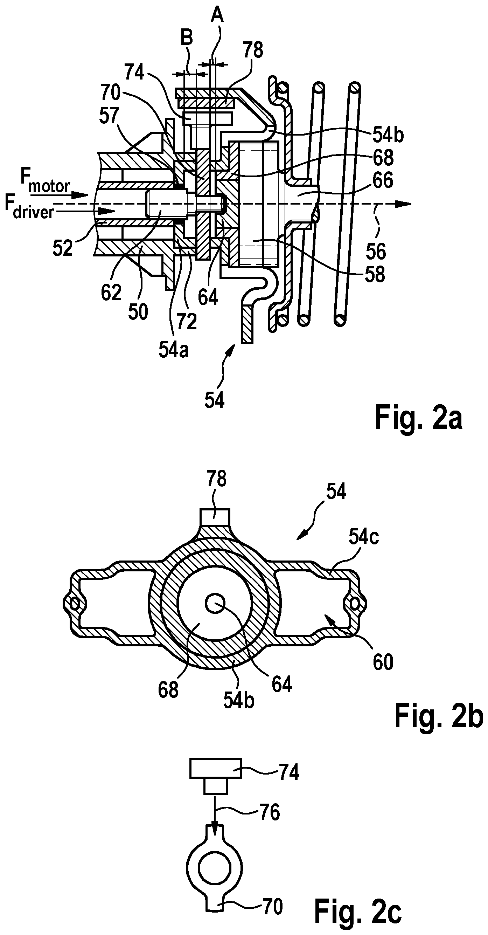

Fig. 2a bis 2c zeigen schematische Teildarstellungen einer Ausführungsform des elektromechanischen Bremskraftverstärkers.

Der nachfolgend beschriebene elektromechanische Bremskraftverstärker kann einem Hauptbremszylinder eines Bremssystems eines Fahrzeugs/Kraftfahrzeugs so vorgelagert werden, dass sowohl eine Motorkraft Fₘₒₜₒᵣ eines (nicht dargestellten) elektrischen Motors als auch eine auf ein (nicht skizziertes) Bremsbetätigungselement/Bremspedal ausgeübte Fahrerbremskraft F_{driver} auf mindestens einen verstellbaren Kolben des Hauptbremszylinders übertragbar sind. Es wird ausdrücklich darauf hingewiesen, dass eine Verwendbarkeit des im Weiteren beschriebenen elektromechanischen Bremskraftverstärkers weder auf einen bestimmten Bremssystemtyp des jeweiligen Bremssystems noch auf einen speziellen Fahrzeugtyp/Kraftfahrzeugtyp des Fahrzeugs/Kraftfahrzeugs beschränkt ist.

Der elektromechanische Bremskraftverstärker umfasst eine Spindelmutter 50, welche mittels des elektrischen Motors in eine Rotation versetzbar ist/versetzt wird. Der elektrische Motor kann wahlweise ein Bremskraftverstärker-eigener Motor oder ein externer Motor sein. An der Spindelmutter 50 ist eine Spindel 52 angeordnet, welche mittels einer Abstützplatte 54a derart drehfest gehalten ist, dass die Spindel 52 und die Abstützplatte 54a mittels der in die Rotation versetzten Spindelmutter 50 in eine reine Translationsbewegung versetzbar sind/versetzt werden. Auf diese Weise kann die Motorkraft Fₘₒₜₒᵣ des elektrischen Motors auf die Spindel 52 und die Abstützplatte 54a so übertragen werden, dass die Abstützplatte 54a entsprechend der Motorkraft Fₘₒₜₒᵣ in eine Einbremsrichtung 56 näher zu dem nachgeordneten Hauptbremszylinder verstellt wird.

Die Abstützplatte 54a ist Teil eines einstückigen Bauteils 54, wobei ein weiterer Teil des einstückigen Bauteils 54 als Reaktionsscheibe-Aufnahmekörper 54b umschreibbar ist. Die Abstützplatte 54a mit dem Reaktionsscheibe-Aufnahmekörper 54b ist als ein einstückiges Bauteil 54 derart ausgebildet, dass ein "Auseinandernehmen" oder "Trennen" von Abstützplatte 54a und Reaktionsscheibe-Aufnahmekörper 54b ohne ein "Auseinanderbrechen" oder "Durchschneiden" des einstückigen Bauteils 54 nicht möglich ist. Das einstückige Bauteil 54 mit der Abstützplatte 54a und dem Reaktionsscheibe-Aufnahmekörper 54b kann auch als ein "Integral-Reaktionsscheibe-Aufnahmekörper" oder als ein "Abstütz-Reaktionsscheibe-Aufnahmekörper" bezeichnet werden. Bevorzugter Weise ist die Abstützplatte 54a mit dem Reaktionsscheibe-Aufnahmekörper 54b als einstückiges Bauteil 54 aus einem einzigen Stück Blech, wie insbesondere aus einem einzigen Stück Stahlblech, geformt. Das einstückige Bauteil 54 kann beispielsweise aus dem einzigen Stück Blech/Stahlblech gestanzt, gebogen und/oder tiefgezogen sein.

Die Abstützplatte 54a kann auch als eine Anti-Rotations-Platte (Anti Rotation Plate, ARP) bezeichnet werden. Trotz der Verwendung des Begriffs "Platte" für die Abstützplatte 54a muss unter Abstützplatte 54a kein glattes Element verstanden werden. Die Abstützplatte 54a kann beispielsweise auch eine gebogene Form, insbesondere eine gekröpfte Form, haben. Die Spindel 52 kann z.B. mit der Abstützplatte 54a/dem einstückigen Bauteil 54 (insbesondere durch ein Laserschweißen) unter Ausbildung einer Schweißnaht 57 verschweißt sein.

Unter dem Reaktionsscheibe-Aufnahmekörper 54b kann ein Körperteil mit einer zur Aufnahme einer Reaktionsscheibe 58 geeigneten Aufnahmeöffnung verstanden werden. Wie in Fig. 2a gezeigt, ist die Reaktionsscheibe 58 in der Aufnahmeöffnung des Reaktionsscheibe-Aufnahmekörpers 54b angeordnet. Der Reaktionsscheibe-Aufnahmekörper 54b kann auch als Ventilkörper (Valve Body) bezeichnet werden. Der einstückig mit der Abstützplatte 54a ausgebildete Reaktionsscheibe-Aufnahmekörper 54b ist selbstverständlich (als Teil des einstückigen Bauteils 54) mit der in die reine Translationsbewegung versetzten Abstützplatte mitbewegbar, wodurch die Motorkraft Fₘₒₜₒᵣ über den Reaktionsscheibe-Aufnahmekörper 54b auf die Reaktionsscheibe 58 übertragbar ist/übertragen wird.

Mittels einer Verwendung des einstückigen Bauteils 54 anstelle der herkömmlichen Verwendung eines "Abstützplatte-Einzelteils" und eines "Reaktionsscheibe-Aufnahmekörper-Einzelteils" gemäß dem Stand der Technik können die oben beschriebenen Clip-Verbindungen eingespart werden. Anstelle einer Ausbildung des Reaktionsscheibe-Aufnahmekörpers 54b aus Kunststoff, wie dies beim Stand der Technik in der Regel notwendig ist, kann für das einstückige Bauteil 54 Blech/Stahlblech verwendet werden, was die unten genauer erläuterten Vorteile ergibt. Das Einsparen der Clip-Verbindungen gewährleistet auch eine größere Kompaktheit des einstückigen Bauteils 54 verglichen mit den herkömmlichen Einzelteilen. Insbesondere kann eine an dem Reaktionsscheibe-Aufnahmekörper 54b auftretende Querkraft über die als Teil des einstückigen Bauteils 54 ausgebildete Abstützplatte 54a problemlos an der Spindel 52 abgestützt werden. Die Ausbildung der Abstützplatte 54a als Teil des einstückigen Bauteils 54 wirkt auch einem Auftreten von Biegespannungen in der Abstützplatte 54a entgegen, und schützt damit die Schweißnaht 57 vor derartigen Biegespannungen.

Außerdem bewirkt die Verwendung des einstückigen Bauteils 54 im Unterschied zu den herkömmlichen Einzelteilen eine "automatische" Fixierung von Abstützplatte 54a und Reaktionsscheibe-Aufnahmekörper 54b zueinander. Beim Stand der Technik werden manchmal Durchbrüche in das "Abstützplatte-Einzelteil" gestanzt und Kunststoff-Pins an dem "Reaktionsscheibe-Aufnahmekörper-Einzelteil" befestigt, so dass eine Fixierung der Einzelteile durch Eintauchen der Kunststoff-Pins in die Durchbrüche des "Abstützplatte-Einzelteils" möglich ist. Auf diese Kunststoff-Pins kann bei der Verwendung des einstückigen Bauteils 54 problemlos verzichtet werden. Auf diese Weise entfallen bei der Verwendung des einstückigen Bauteils 54 auch die herkömmlicher Weise oft noch notwendigen Prozesse zum Ausbilden der Durchbrüche an dem Abstützplatte-Einzelteil mittels eines Blech-Stanzens und zum Befestigen oder Ausbilden der Kunststoff-Pins an dem Reaktionsscheibe-Aufnahmekörper-Einzelteil mittels eines Kunststoff-Spritzens. Während beim Stand der Technik Ungenauigkeit beim Ausführen dieser Prozesse häufig zur ungenauen Justage der Einzelteile zueinander führen, sind derartige Probleme bei der Verwendung des einstückigen Bauteils 54 behoben.

Wie in Fig. 2b gezeigt, können an einem die Aufnahmeöffnung zum Aufnehmen der Reaktionsscheibe 58 umrahmenden Rand des einstückigen Bauteils 54 mindestens ein Gleitbuchsen-Befestigungsabschnitt 54c mit jeweils einer Gleitbuchsen-Aufnahmeöffnung 60 ausgebildet sein. Mindestens eine (nichtskizzierte) Gleitbuchse kann in die mindestens eine Gleitbuchsen-Aufnahmeöffnung 60 eingesetzt sein. Die mindestens eine Gleitbuchse kann mittels je eines Zugankers geführt sein. Auf diese Weise kann die Spindel 52 verlässlich drehfest gehalten sein. Die Reaktionsscheibe 58 des einstückigen Bauteils 54 ist vorzugsweise so geformt, dass die mindestens eine in der zugeordneten Gleitbuchsen-Aufnahmeöffnung 60 eingesetzte Gleitbuchsen in einer "gleichen Ebene" mit der Reaktionsscheibe 58 liegt. Eine ausgeprägte Kröpfung der Reaktionsscheibe 58 des einstückigen Bauteils 54 ist nicht notwendig. In diesem Fall ist kein "Verdrillen" des einstückigen Bauteils 54 durch Querkräfte oder ein Auftreten von Biegemomenten an dem einstückigen Bauteil 54 zu befürchten.

Beispielsweise können zwei Gleitbuchsen-Aufnahmeöffnungen 60 an zwei Gleitbuchsen-Befestigungsabschnitten 54c des einstückigen Bauteils 54 ausgebildet sein, so dass zum Unterbinden einer unerwünschten Drehbewegung der Spindel 52 zwei Gleitbuchsen mittels zweier Zuganker geführt werden können. Auf diese Weise kann eine rotatorische Bewegung der Spindelmutter 50 problemlos in die reine Translationsbewegung der Spindel 52 zusammen mit dem einstückigen Bauteil 54 übersetzt werden.

Der elektromechanische Bremskraftverstärker der Fig. 2a bis 2c weist als vorteilhafte Ergänzung auch einen Plunger 62 mit einem daran befestigten oder ausgebildeten Pastillen-Teil 64 auf, wobei der Plunger 62 zumindest teilweise innerhalb der als Hohlspindel ausgebildeten Spindel 52 angeordnet ist. Vorteilhafterweise ist in dem als Teil des einstückigen Bauteils 54 ausgebildeten Reaktionsscheibe-Aufnahmekörper 18 eine mittige Öffnung derart ausgebildet, dass das durch die mittige Öffnung ragende Pastillen-Teil 64 mit der Reaktionsscheibe 58 in Kontakt vorliegt oder bringbar ist. Optionaler Weise kann in die Aufnahmeöffnung zur Aufnahme der Reaktionsscheibe 58 noch eine Bodenplatte 68 eingesetzt sein. Die Bodenplatte 68 kann eine mittige durchgehende Öffnung aufweisen, durch welche das Pastillen-Teil 64 in Kontakt mit der Reaktionsscheibe 58 bringbar ist. Die auf das Bremsbetätigungselement/Bremspedal ausgeübte Fahrerbremskraft F_{driver} wird über den Plunger 62 und über das mit der Reaktionsscheibe 58 in Kontakt vorliegende oder gebrachte Pastillen-Teil 64 auf die Reaktionsscheibe 58 übertragen. Sowohl die auf die Reaktionsscheibe 58 ausgeübte Motorkraft Fₘₒₜₒᵣ als auch die auf die Reaktionsscheibe 58 übertragene Fahrerbremskraft F_{driver} können über einen in Einbremsrichtung 56 zu der Reaktionsscheibe 58 vorliegenden Ausgangskolben 66 auf den mindestens einen verstellbaren Kolben des nachgeordneten Hauptbremszylinders weitergeleitet werden.

Wie in Fig. 2a erkennbar ist, reduziert eine Verwendung der Bodenplatte 68 einen Durchmesser zur Übertragung der Motorkraft Fₘₒₜₒᵣ auf die Reaktionsscheibe 58 gegenüber dem Stand der Technik. Die Schweißnaht 57 zwischen der Spindel 52 und dem einstückigen Bauteil 54 wird somit durch die Übertragung der Motorkraft Fₘₒₜₒᵣ auf die Reaktionsscheibe 58 nicht/kaum belastet.

An dem Plunger 62 ist vorzugsweise auch eine sich senkrecht davon weg erstreckende flächige Passform 70, welche auch als Key umschreibbar ist, befestigt oder ausgebildet. Der Plunger 62, das Pastillen-Teil 64 und die flächige Passform 70 können z.B. miteinander verpresst oder verstemmt sein. Außerdem kann an dem einstückigen Bauteil 54 mindestens eine durchgehende Öffnung ausgebildet sein, durch welche jeweils ein Teilabschnitt der flächigen Passform 70 ragt. In diesem Fall ist es vorteilhaft, wenn an der Spindelmutter 50 mindestens ein Vorstand 72 ausgebildet ist, welcher in Kontakt mit dem mindestens einen durch die mindestens eine durchgehende Öffnung ragenden Teilabschnitt der flächigen Passform 70 vorliegt oder bringbar ist. Der mindestens eine Vorstand 72 ist vorzugsweise ein vorstehender Ringbund 72. Mittels des mindestens einen an der Spindelmutter 50 ausgebildeten Vorstands 72 können die herkömmlicherweise zum Abstützen der flächigen Passform 70 an der Spindelmutter 50 verwendeten Kunststoff-Pins an der flächigen Passform 70 eingespart werden. Ein Spritzprozess zum Ausbilden der Kunststoff-Pins an der flächigen Passform 70 wird auf diese Weise unnötig. Deshalb kann bei dem elektromechanischen Bremskraftverstärker der Fig. 2a bis 2c ein vergleichsweise kostengünstiges Bauteil als flächige Passform 70 eingesetzt werden. Die flächige Passform 70 kann z.B. aus Blech/Stahlblech geformt sein.

Da auch das einstückige Bauteil 54 vorzugsweise aus Blech/Stahlblech geformt ist, ergibt sich somit die Möglichkeit, die flächige Passform 70 und das einstückige Bauteil 54 aus dem gleichen Material oder aus Materialien mit (nahezu) gleichen Wärmeausdehnungskoeffizienten zu bilden. Die Wärmeausdehnungen der flächigen Passform 70 und des einstückigen Bauteils 54 "kompensieren" sich somit.

Sofern der elektromechanische Bremskraftverstärker, wie in Fig. 2a wiedergegeben, in seinem unbetätigten Zustand oder kraftlosen Ausgangszustand vorliegt, d.h. sofern die Motorkraft Fₘₒₜₒᵣ und die Fahrerbremskraft F_{driver} gleich Null sind, liegen ein Abstand A ungleich Null zwischen der flächigen Passform 70 und der Bodenplatte 68 und ein Abstand B ungleich Null zwischen der flächigen Passform 70 und der Abstützplatte 54a vor. Der Abstand A ungleich Null im unbetätigten Zustand des elektromechanischen Bremskraftverstärkers ist mittels der Form der Bodenplatte 68 festlegbar. Wie oben bereits erläutert, ist der Abstand B ungleich Null im unbetätigten Zustand des elektromechanischen Bremskraftverstärkers mittels der Ausbildung des mindestens einen Vorstands 72 an der Spindelmutter 50 festlegbar.

Als vorteilhafte Weiterbildung kann noch ein Magnet 74, wie beispielsweise ein Stabmagnet 74, an dem mindestens einen durch die mindestens eine durchgehende Öffnung ragenden Teilabschnitts der flächigen Passform 70 angebracht sein. Wie mittels des Pfeils 76 in Fig. 2c wiedergegeben ist, kann das Befestigen des Magneten/Stabmagneten 74 durch ein einfaches Feststecken des Magneten/Stabmagneten 74 an der flächigen Passform 70 erfolgen. Eine derartige "nachträgliche" Fixierung des Magneten/Stabmagneten 74 an der flächigen Passform 70 ist weitaus kostengünstiger als ein Umspritzen des Magneten/Stabmagneten 74 mit einem Kunststoff in einem Spritzprozess, wie dies beim Stand der Technik erfolgt.

Benachbart zu dem Magneten/Stabmagneten 74 kann noch ein (Differenz-)Wegsensor 78 an dem einstückigen Bauteil 74 befestigt sein. Durch ein Zusammenwirken des (Differenz-)Wegsensors 78 mit dem Magneten/Stabmagneten 74 kann ein Differenzweg zwischen einem (mittels der Motorkraft Fₘₒₜₒᵣ bewirkten) ersten Verstellweg der Spindel 52 zusammen mit dem einstückigen Bauteil 54 und einem (mittels der Fahrerbremskraft F_{driver} bewirkten) zweiten Verstellweg des Plungers 62 zusammen mit dem Pastillen-Teil 64 und der flächigen Passform 70 verlässlich bestimmt werden. Sofern die flächige Passform 70 und das einstückige Bauteil 54 aus dem gleichen Material oder aus Materialien mit (nahezu) gleichen Wärmeausdehnungskoeffizienten geformt sind, und die flächige Passform 70 und das einstückige Bauteil 54 deshalb keine "unterschiedlichen" Wärmeausdehnungen aufweisen, müssen selbst über einen vergleichsweise großen Temperaturbereich zwischen -40°C bis zu 100°C keine temperaturschwankungsbedingten Messfehler beim Messen des Differenzwegs mittels des (Differenz-)Wegsensors 78 befürchtet werden.

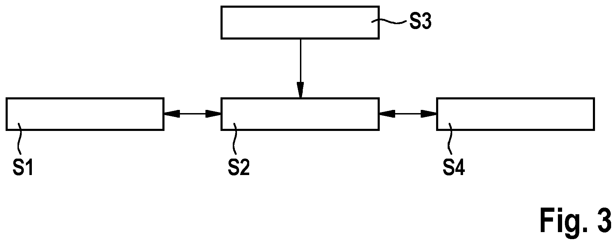

Fig. 3 zeigt ein Flussdiagramm zum Erläutern einer Ausführungsform des Herstellungsverfahrens für einen elektromechanischen Bremskraftverstärker für ein Bremssystem eines Fahrzeugs.

Mittels des im Weiteren beschriebenen Herstellungsverfahrens kann beispielsweise der oben erläuterte elektromechanische Bremskraftverstärker hergestellt werden. Eine Ausführbarkeit des Herstellungsverfahrens ist jedoch nicht auf das Herstellen dieses elektromechanischen Bremskraftverstärkers beschränkt.

In einem Verfahrensschritt S1 wird eine Spindelmutter derart in dem späteren elektromechanischen Bremskraftverstärker angeordnet, dass die Spindelmutter bei einem späteren Betrieb des elektromechanischen Bremskraftverstärkers mittels eines bremskraftverstärkereigenen oder externen elektrischen Motors in eine Rotation versetzt wird.

Eine Spindel wird in einem Verfahrensschritt S2 an der Spindelmutter angeordnet und mittels einer Abstützplatte derart drehfest abgestützt, dass die Spindel und die Abstützplatte mittels der in die Rotation versetzten Spindelmutter in eine reine Translationsbewegung versetzt werden. Vor dem Verfahrensschritt S2 wird ein Verfahrensschritt S3 ausgeführt, in welchem die Abstützplatte mit einem Reaktionsscheibe-Aufnahmekörper als einstückiges Bauteil hergestellt wird. Beispielsweise wird die Abstützplatte mit dem Reaktionsscheibe-Aufnahmekörper als einstückiges Bauteil aus einem einzigen Stück Blech geformt. Vorzugsweise wird die Abstützplatte mit dem Reaktionsscheibe-Aufnahmekörper als einstückiges Bauteil aus dem einzigen Stück Blech gestanzt, gebogen und/oder tiefgezogen.

In einem weiteren Verfahrensschritt S4 wird eine Reaktionsscheibe in eine Aufnahmeöffnung des Reaktionsscheibe-Aufnahmekörpers eingesetzt. Da der Reaktionsscheibe-Aufnahmekörper Teil des einstückigen Bauteils ist, wird er mittels der in die reine Translationsbewegung versetzten Abstützplatte mitbewegt, und realisiert somit eine Kraftübertragung zwischen dem für den Betrieb des elektromechanischen Bremskraftverstärkers eingesetzten elektrischen Motor und der Reaktionsscheibe.

Ein mittels der hier beschriebenen Verfahrensschritte S1 bis S4 hergestellter elektromechanischer Bremskraftverstärker erfüllt die oben schon erläuterten Vorteile. Die Verfahrensschritte S1, S2 und S4 können in beliebiger Reihenfolge, zeitlich überlappend oder gleichzeitig ausgeführt werden. Das hier beschriebene Herstellungsverfahren kann außerdem gemäß dem oben erläuterten elektromechanischen Bremskraftverstärker weitergebildet werden.

## Patentansprüche

1. Elektromechanischer Bremskraftverstärker für ein Bremssystem eines Fahrzeugs mit:
einer Spindelmutter (50), welche mittels eines bremskraftverstärkereigenen oder externen elektrischen Motors in eine Rotation versetzbar ist;
einer an der Spindelmutter (50) angeordneten Spindel (52), welche mittels einer Abstützplatte (54a) derart drehfest gehalten ist, dass die Spindel (52) und die Abstützplatte (54a) mittels der in die Rotation versetzten Spindelmutter (50) in eine reine Translationsbewegung versetzbar sind; und
einem Reaktionsscheibe-Aufnahmekörper (54b), welcher mittels der in die reine Translationsbewegung versetzten Abstützplatte (54a) mitbewegbar ist, wobei der Reaktionsscheibe-Aufnahmekörper (54b) eine Aufnahmeöffnung aufweist, in welcher eine Reaktionsscheibe (58) angeordnet ist;
**dadurch gekennzeichnet, dass**
die Abstützplatte (54a) und der Reaktionsscheibe-Aufnahmekörper (54b) als einstückiges Bauteil (54) ausgebildet sind.

2. Elektromechanischer Bremskraftverstärker nach Anspruch 1, wobei die Abstützplatte (54a) mit dem Reaktionsscheibe-Aufnahmekörper (54b) als einstückiges Bauteil (54) aus einem einzigen Stück Blech geformt ist.

3. Elektromechanischer Bremskraftverstärker nach Anspruch 1 oder 2, wobei an einem die Aufnahmeöffnung umrahmenden Rand des einstückigen Bauteils (54) mindestens ein Gleitbuchsen-Befestigungsabschnitt (54c) mit jeweils einer Gleitbuchsen-Aufnahmeöffnung (60) ausgebildet ist, und wobei mindestens eine Gleitbuchse in die mindestens eine Gleitbuchsen-Aufnahmeöffnung (60) eingesetzt ist, welche mittels je eines Zugankers geführt ist.

4. Elektromechanischer Bremskraftverstärker nach einem der vorhergehenden Ansprüche, wobei ein Plunger (62) mit einem daran befestigten oder ausgebildeten Pastillen-Teil (64) zumindest teilweise derart innerhalb der als Hohlspindel ausgebildeten Spindel (52) angeordnet ist, dass das Pastillen-Teil (64) in Kontakt mit der Reaktionsscheibe (58) vorliegt oder bringbar ist, wobei an dem Plunger (62) eine sich senkrecht davon weg erstreckende flächige Passform (70) befestigt oder ausgebildet ist, und wobei in dem einstückigen Bauteil (54) mindestens eine durchgehende Öffnung ausgebildet ist, durch welche jeweils ein Teilabschnitt der flächigen Passform (70) ragt.

5. Elektromechanischer Bremskraftverstärker nach Anspruch 4, wobei an der Spindelmutter (50) mindestens ein Vorstand (72) ausgebildet ist, welche in Kontakt mit dem mindestens einen durch die mindestens eine durchgehende Öffnung ragenden Teilabschnitt der flächigen Passform (70) vorliegt oder bringbar ist.

6. Elektromechanischer Bremskraftverstärker nach Anspruch 4 oder 5, wobei ein Magnet (74) an dem mindestens einen durch die mindestens eine durchgehende Öffnung ragenden Teilabschnitt der flächigen Passform (70) festgesteckt ist.

7. Elektromechanischer Bremskraftverstärker nach Anspruch 6, wobei benachbart zu dem Magneten (74) ein Wegsensor (78) an dem einstückigen Bauteil (54) befestigt ist.

8. Herstellungsverfahren für einen elektromechanischen Bremskraftverstärker für ein Bremssystem eines Fahrzeugs mit den Schritten:
Anordnen einer Spindelmutter (50) derart in dem späteren elektromechanischen Bremskraftverstärker, dass die Spindelmutter (50) bei einem späteren Betrieb des elektromechanischen Bremskraftverstärkers mittels eines bremskraftverstärkereigenen oder externen elektrischen Motors in eine Rotation versetzt wird (S1);
Anordnen einer Spindel (52) an der Spindelmutter (50) und drehfestes Abstützen der Spindel (52) derart mittels einer Abstützplatte (54a), dass die Spindel (52) und die Abstützplatte (52a) mittels der in die Rotation versetzten Spindelmutter (50) in eine reine Translationsbewegung versetzt werden (S2); und
Einsetzen einer Reaktionsscheibe (58) in eine Aufnahmeöffnung eines Reaktionsscheibe-Aufnahmekörpers (54b), welcher mittels der in die reine Translationsbewegung versetzten Abstützplatte (54a) mitbewegt wird (S4);
**gekennzeichnet durch** den Schritt:
Herstellen der Abstützplatte (54a) mit dem Reaktionsscheibe-Aufnahmekörper (54b) als einstückiges Bauteil (54) (S3).

9. Herstellungsverfahren nach Anspruch 8, wobei die Abstützplatte (54a) mit dem Reaktionsscheibe-Aufnahmekörper (54b) als einstückiges Bauteil (54) aus einem einzigen Stück Blech geformt wird.

10. Herstellungsverfahren nach Anspruch 9, wobei die Abstützplatte (54a) mit dem Reaktionsscheibe-Aufnahmekörper (54b) als einstückiges Bauteil (54) aus dem einzigen Stück Blech gestanzt, gebogen und/oder tiefgezogen wird.

## Claims

1. Electromechanical brake booster for a brake system of a vehicle, comprising:
a spindle nut (50), which can be set rotating by means of an electric motor which is integrated into the brake booster or is external;
a spindle (52), which is arranged on the spindle nut (50) and is held in a rotationally fixed manner by means of a supporting plate (54a) in such a way that the spindle (52) and the supporting plate (54a) can be caused to make a pure translational movement by means of the spindle nut (50) that is set rotating; and
a reaction disc receiving element (54b), which can be moved along by means of the supporting plate (54a) that is caused to make the pure translational movement, wherein the reaction disc receiving element (54b) has a receiving opening in which a reaction disc (58) is arranged;
**characterized in that**
the supporting plate (54a) and the reaction disc receiving element (54b) are formed as a one-piece component (54).

2. Electromechanical brake booster according to Claim 1, wherein the supporting plate (54a), together with the reaction disc receiving element (54b) as a one-piece component (54), is formed from a single piece of sheet metal.

3. Electromechanical brake booster according to Claim 1 or 2, wherein at least one sliding bush fastening section (54c) each having a sliding bush receiving opening (60) is formed on an edge of the one-piece component (54) that surrounds the receiving opening, and wherein at least one sliding bush, which is guided by means of a respective tie rod, is inserted into the at least one sliding bush receiving opening (60).

4. Electromechanical brake booster according to one of the preceding claims, wherein a plunger (62) with a pastille part (64) fixed thereto or formed thereon is at least partly arranged within the spindle (52) formed as a hollow spindle, in such a way that the pastille part (64) is in contact or can be brought into contact with the reaction disc (58), wherein a flat fitting piece (70) is fastened to or formed on the plunger (62) and extends perpendicularly away from the latter, and wherein at least one through opening, through which a respective portion of the flat fitting piece (70) projects, is formed in the one-piece component (54).

5. Electromechanical brake booster according to Claim 4, wherein at least one protrusion (72) is formed on the spindle nut (50), which protrusion is in contact or can be brought into contact with the at least one portion of the flat fitting piece (70) that projects through the at least one through opening.

6. Electromechanical brake booster according to Claim 4 or 5, wherein a magnet (74) is affixed to the at least one portion of the flat fitting piece (70) that projects through the at least one through opening.

7. Electromechanical brake booster according to Claim 6, wherein a displacement sensor (78) is fastened to the one-piece component (54), adjacent to the magnet (74).

8. Production method for an electromechanical brake booster for a brake system of a vehicle, comprising the steps:
arranging a spindle nut (50) in the subsequent electromechanical brake booster in such a way that during subsequent operation of the electromechanical brake booster, the spindle nut (50) is set rotating by means of an electric motor that is integrated in the brake booster or is external (S1);
arranging a spindle (52) on the spindle nut (50) and supporting the spindle (52) in a rotationally fixed manner by means of a supporting plate (54a) in such a way that the spindle (52) and the supporting plate (52a) are caused to carry out a purely translational movement by means of the spindle nut (50) that is set rotating (S2); and
inserting a reaction disc (58) into a receiving opening of a reaction disc receiving element (54b), which is carried along by means of the supporting plate (54a) that is caused to make the pure translational movement (S4);
**characterized by** the step:
producing the supporting plate (54a) with the reaction disc receiving element (54b) as a one-piece component (54) (S3).

9. Production method according to Claim 8, wherein the supporting plate (54a), together with the reaction disc receiving element (54b) as a one-piece component (54), is formed from a single piece of sheet metal.

10. Production method according to Claim 9, wherein the supporting plate (54a), together with the reaction disc receiving element (54b) as a one-piece component (54), is punched, bent and/or deep-drawn from the single piece of sheet metal.

## Revendications

1. Amplificateur de puissance de freinage électromécanique pour un système de freinage d'un véhicule comportant :
un écrou de broche (50), lequel peut être mis en rotation au moyen d'un moteur propre à l'amplificateur de puissance de freinage ou électrique externe ;
une broche (52) disposée au niveau de l'écrou de broche (50), laquelle est maintenue de manière bloquée en rotation au moyen d'une plaque de support (54a) de telle sorte que la broche (52) et la plaque de support (54a) puissent être déplacées suivant un mouvement de translation pure au moyen de l'écrou de broche (50) mis en rotation ; et
un corps de réception de disque de réaction (54b), lequel peut être déplacé conjointement au moyen de la plaque de support (54a) déplacée suivant le mouvement de translation pure, le corps de réception de disque de réaction (54b) présentant une ouverture de réception dans laquelle un disque de réaction (58) est disposé ;
**caractérisé en ce que**
la plaque de support (54a) et le corps de réception de disque de réaction (54b) sont réalisés sous forme de composant (54) d'une seule pièce.

2. Amplificateur de puissance de freinage électromécanique selon la revendication 1, la plaque de support (54a) étant formée avec le corps de réception de disque de réaction (54b) sous forme de composant (54) d'une seule pièce à partir d'un seul morceau de tôle.

3. Amplificateur de puissance de freinage électromécanique selon la revendication 1 ou 2, au moins une partie de fixation de douille de glissement (54c) dotée de respectivement une ouverture de réception de douille de glissement (60) étant formée au niveau d'un bord du composant (54) d'une seule pièce encadrant l'ouverture de réception, et au moins une douille de glissement étant insérée dans l'au moins une ouverture de réception de douille de glissement (60), laquelle est guidée au moyen d'un tirant respectif.

4. Amplificateur de puissance de freinage électromécanique selon l'une des revendications précédentes, un plongeur (62) doté d'une partie de pastille (64) fixée ou formée sur celui-ci étant disposé au moins partiellement à l'intérieur de la broche (52) réalisée sous forme de broche creuse, de telle sorte que la partie de pastille (64) soit ou puisse être amenée en contact avec le disque de réaction (58), un ajustement plan (70) s'étendant perpendiculairement au plongeur (62) et à l'écart de celui-ci étant fixé ou formé sur celui-ci, et au moins une ouverture traversante étant formée dans le composant (54) d'une seule pièce, ouverture à travers laquelle fait saillie respectivement une section partielle de l'ajustement plan (70).

5. Amplificateur de puissance de freinage électromécanique selon la revendication 4, au moins une saillie (72) étant formée sur l'écrou de broche (50), laquelle saillie est ou peut être amenée en contact avec l'au moins une section partielle de l'ajustement plan (70) faisant saillie à travers l'au moins une ouverture traversante.

6. Amplificateur de puissance de freinage électromécanique selon la revendication 4 ou 5, un aimant (74) étant fixé à l'au moins une section partielle de l'ajustement plan (70) faisant saillie à travers l'au moins une ouverture traversante.

7. Amplificateur de puissance de freinage électromécanique selon la revendication 6, un capteur de déplacement (78) étant fixé au composant (54) d'une seule pièce au voisinage de l'aimant (74).

8. Procédé de fabrication pour un amplificateur de puissance de freinage électromécanique pour un système de freinage d'un véhicule comportant les étapes suivantes
agencement d'un écrou de broche (50) dans l'amplificateur de puissance de freinage électromécanique ultérieur de telle sorte que l'écrou de broche (50) soit mis en rotation au moyen d'un moteur propre à l'amplificateur de puissance de freinage ou électrique externe lors d'un fonctionnement ultérieur de l'amplificateur de puissance de freinage électromécanique (S1) ;
agencement d'une broche (52) au niveau de l'écrou de broche (50) et maintien de manière bloquée en rotation de la broche (52) au moyen d'une plaque de support (54a) de telle sorte que la broche (52) et la plaque de support (54a) soient déplacées suivant un mouvement de translation pure au moyen de l'écrou de broche (50) mis en rotation (S2) ; et
insertion d'un disque de réaction (58) dans une ouverture de réception d'un corps de réception de disque de réaction (54b), lequel est déplacé conjointement au moyen de la plaque de support (54a) déplacée suivant le mouvement de translation pure (S4) ;
**caractérisé par** l'étape suivante :
fabrication de la plaque de support (54a) avec le corps de réception de disque de réaction (54b) sous forme de composant (54) d'une seule pièce (S3).

9. Procédé de fabrication selon la revendication 8, la plaque de support (54a) étant formée avec le corps de réception de disque de réaction (54b) sous forme de composant (54) d'une seule pièce à partir d'un seul morceau de tôle.

10. Procédé de fabrication selon la revendication 9, la plaque de support (54a) étant découpée, cintrée et/ou emboutie avec le corps de réception de disque de réaction (54b) sous forme de composant (54) d'une seule pièce à partir du seul morceau de tôle.
